Europäisches Patentamt

European Patent Office

Office européen des brevets

(11) Veröffentlichungsnummer: **0 034 792**

A1

## (12) EUROPÄISCHE PATENTANMELDUNG

(21) Anmeldenummer: 81101122.0

(22) Anmeldetag: 17.02.81

(51) Int. Cl.³: **H 01 R 17/12**

(30) Priorität: 25.02.80 CH 1466/80

(43) Veröffentlichungstag der Anmeldung:
02.09.81 Patentblatt 81/35

(84) Benannte Vertragsstaaten:
CH DE FR GB IT LI NL SE

(71) Anmelder: CONTRAVES AG
Schaffhauserstrasse 580
CH-8052 Zürich(CH)

(72) Erfinder: Meier, Walter
Breitackerstrasse 15
CH-8702 Zollikon(CH)

(74) Vertreter: Köver, François, Dr. et al,
Patentanwälte H.Mitscherlich K. Gunschmann, Dr. W.
Körber, J.Schmidt-Evers Steinsdorfstrasse 10
D-8000 München 22(DE)

(54) Anschlussvorrichtung für ein abgeschirmtes Kabel.

(57) Strahlungsdichte Anschlussvorrichtung (3) für ein Kabel (10) mit einem durch Klemmung fixierten Abschirmgeflecht (9), wobei ein Einsatz, ausgestattet mit einem Einsatzkonus (19) und einem angeformten Kragen (18), in eine konische Bohrung (26) einer Ueberwurfmutter (30) achsparallel eingesetzt ist.

Am Einsatzkonus (19) ist eine äussere konische Auflagefläche (15) vorgesehen, die zu der inneren Auflagefläche (25) der konischen Bohrung (26) der Ueberwurfmutter (30) korrespondiert. Bei der Montage wird das nicht entflochtene Abschirmgeflecht (9) durch Klemmung zwischen den beiden Auflageflächen (15,25) festgelegt.

Die Erfindung wird vorzugsweise in Verbindung mit Steckern angewendet.

FIG. 3

EP 0 034 792 A1

Croydon Printing Company Ltd.

Anschlussvorrichtung für ein abgeschirmtes Kabel

Strahlungsdichte Anschlussvorrichtung für ein Kabel mit einem durch Klemmung fixierten Abschirmgeflecht, wobei ein Einsatz ausgestattet mit einem Einsatzkonus und einem angeformten Kragen in eine konische Bohrung einer Ueberwurfmutter achsparallel eingesetzt ist.

Um Ueberlagerungen von Signalen in einem Leiter mit Signalen ausserhalb des Leiters zu verhindern, werden Kabelabschirmungen aus Metallgeflechten verwendet. Solche Abschirmungen werden durch die zunehmende Empfindlichkeit der verwendeten Geräte immer wichtiger. Bei militärischen Geräten ist es ausserdem erforderlich, dass kritische Leitungen neben den üblichen elektromagnetischen Störungen auch vor den Kräften der sogenannten Elektro-Magnetischen-Pulse (EMP) geschützt werden. Diese Impulse werden von Kernwaffenexplosionen erzeugt und können Stärken von mehreren tausend Volt überschreiten.

Bei Anschlussvorrichtungen sind die Uebergänge der Abschirmgeflechte auf feste Teile häufig die Stellen an denen Störungen auftreten. Bei einem Auskämmen des Abschirmgeflechts an den Anschlussvorrichtungen entstehen oft Oeffnungen, die eine elektromagnetische Undichtigkeit bewirken. Auch sind Lötarbeiten beim Anschluss des Abschirmgeflechts durch ihre Wärmeeinwirkungen oft die Ursache von Bruchstellen am Abschirmgeflecht.

Durch die US-PS 3,889,046 ist eine Anschlussvorrichtung für ein abgeschirmtes Kabel bekannt, das neben anderen Teilen vier flache, mit exzentrischen Oeffnungen versehene Metallringe vorsieht. Die Metallringe werden durch Klemmverschraubung gegen das über einen Konus gestülpte Abschirmgeflecht gepresst. Durch die versetzt angeordneten Oeffnungen der Metallringe wird das Geflecht mit unterschiedlichem Druck gegen den Konus gepresst. Neben der aufwendigen Herstellung entsteht bei dieser Vorrichtung durch die starke Beanspruchung für feine Abschirmgeflechte eine wesentliche Bruchgefahr.

Durch die DE-23 43 030 Al ist eine lösbare Anschlussvorrichtung für ein Koaxialkabel mit Voll- oder Luftraumisolierung zwischen dem Innenleiter und dem ummantelten Aussenleiter bekannt. Zur Fixierung des Aussenleiters ist eine Klemmverschraubung vorgesehen, die neben einer Ueberwurfmutter einen Einsatz mit zwei Aussengewinden sowie eine Stützhülse vorsieht, welche durch Aufschrauben auf den Schutzmantel befestigt wird. Diese für Koaxialkabel vorgesehene Vorrichtung weist eine für den Anschluss von Abschirmgeflechten überflüssige Vielfalt konstruktiver Elemente auf, und ist daher zu teuer.

Ausgehend von diesem Stand der Technik liegt der Erfindung die Aufgabe zugrunde, eine Anschlussvorrichtung der eingangs beschriebenen Art zu schaffen, in der das angeschlossene Abschirmgeflecht auch bei starker Beanspruchung durch Schock, Stoss und Vibration unverformt fixiert wird. Der Anschluss soll niederohmig, HF-dicht und militärtauglich sein. Neben einer kostengünstigen Herstellung soll eine problemlose Montage und Reparatur der aus möglichst wenigen Teilen bestehenden Anschlussvorrichtung möglich sein.

Diese Aufgabe wird dadurch gelöst, dass am Einsatzkonus (19) eine konische Auflagefläche (15) vorgesehen ist, die der Auflagefläche (25) der konischen Bohrung (26) der Ueberwurfmutter (30) entspricht, und dass das geflochtene Abschirmgeflecht (9) ausschliesslich durch Klemmung zwischen den beiden Auflageflächen (15,25) festgelegt ist.

Die erfindungsgemässe Anschlussvorrichtung ermöglicht durch die geringe Anzahl als auch durch die vorteilhafte Formgebung der Einzelteile eine kostengünstige Herstellung und einen einfachen Zusammenbau. Vorteilhaft ist weiterhin, dass das Abschirmgeflecht nicht ausgekämmt und gelötet werden muss, und dass eine gute HF-Dichtigkeit und ein kleiner Uebergangswiderstand zum Gehäuse erreicht wird.

Weitere vorteilhafte Ausbildungen der Anschlussvorrichtung ergeben sich aus den Unteransprüchen.

Im folgenden wird anhand der Zeichnung die Ausführung der Erfindung näher beschrieben.

Es zeigen:

Fig. 1 die in übergrossem Massstab dargestellte Seitenansicht der montierten Anschlussvorrichtung. Zur besseren Sichtbarkeit sind einige Teile im Längsschnitt dargestellt,

Fig. 2 die Seitenansicht der montierten Anschlussvorrichtung im Halbschnitt und teilweise geschlitztem Schrumpfformteil,

Fig. 3 ein vergrösserter Ausschnitt aus der Figur 2,

Fig. 4 die Seitenansicht der Anschlussvorrichtung mit distanziert dargestellten Einzelteilen.

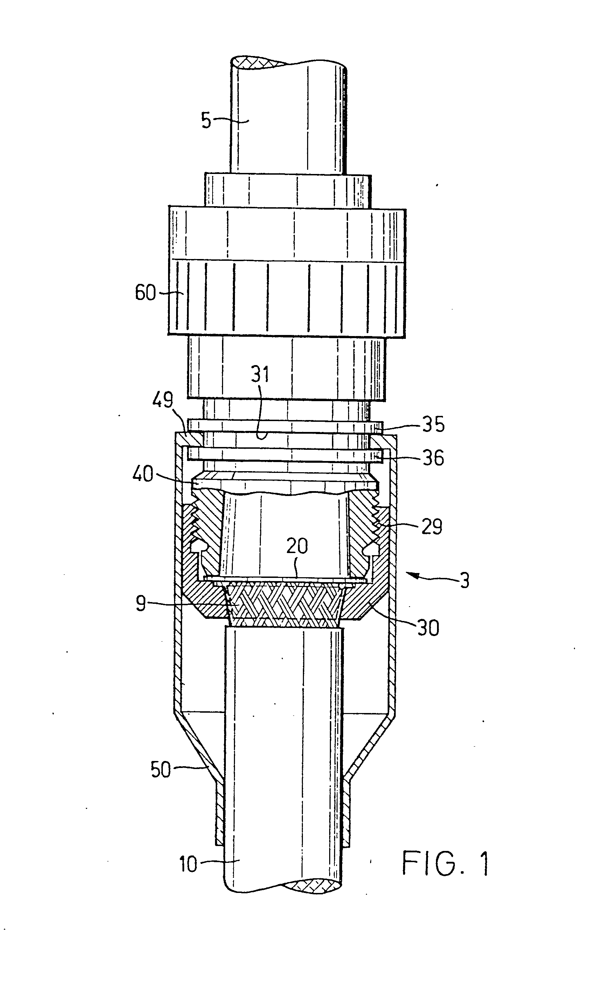

Die Figur 1 zeigt die Anschlussvorrichtung 3 im montierten Zustand sowie die angeschlossenen Kabel 10 und 5, das Warmschrumpfformteil 50 und den Stecker-Kontaktteil 60. Die Anschlussvorrichtung 3 besteht lediglich aus drei Einzelteilen: dem Einsatz 20, der Ueberwurfmutter 30 und dem Steckerendgehäuse 40. Die Anschlussvorrichtung 3 ist von einem zylindrischen Warmschrumpfformteil 50 umgeben, das an einem Ende durch einen radial nach innen gerichteten Kragen 49 in die Nut 31 des Steckerendgehäuses 40 greift und gegen das andere Ende hin sich zum Kabel 10 konisch verjüngt und dieses dicht umschliesst. Durch den Warmschrumpfformteil 50 wird das ummantelte Kabel 10 bezüglich der Anschlussvorrichtung 3 in der Längsrichtung verschiebungssicher fixiert.

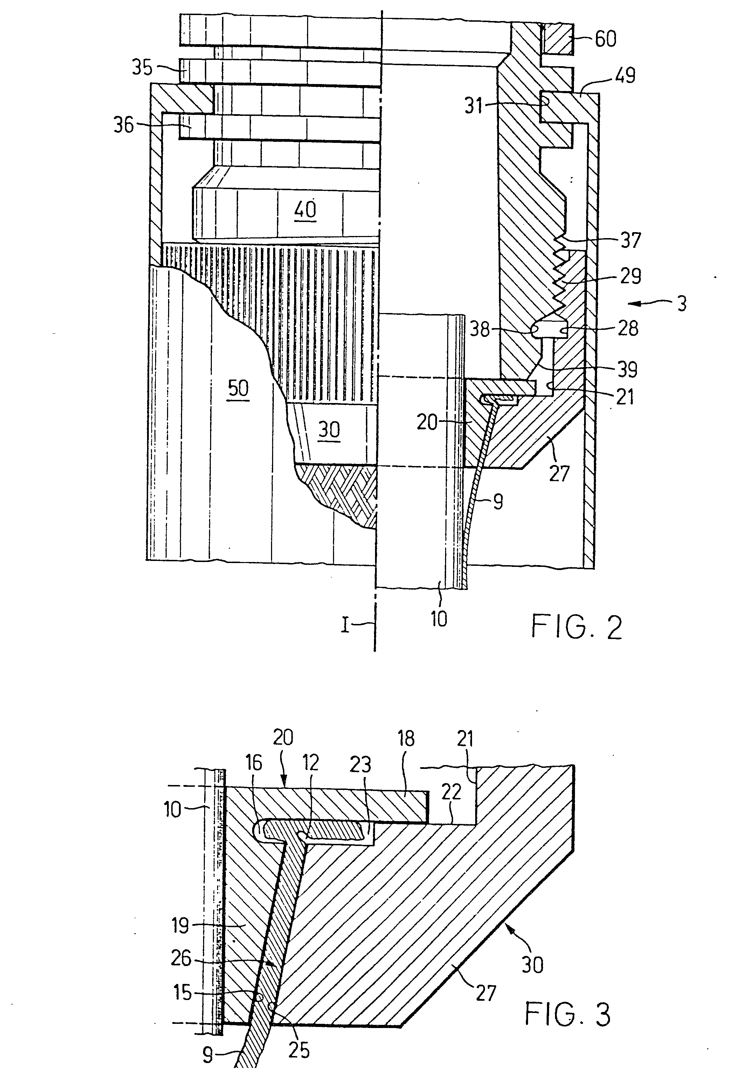

In den Figuren 2 und 3 ist der Anschluss des Abschirmgeflechts 9 an die Anschlussvorrichtung 3 nochmals verdeutlicht.

Der Einsatz 20 besteht aus dem Einsatzkonus 19 und dem angeformten, radial nach aussen gerichteten Kragen 18, der durch eine ringförmige Ausnehmung 16 vom Einsatzkonus 19 abgesetzt ist. Der Einsatzkonus 19 ist durch eine konische Auflagefläche 15 begrenzt, welche sich vom Kragen 18 weg verjüngt. Die Neigung der kegelförmigen Auflagefläche 15 gegen die Kegelachse entspricht derjenigen des an sich bekannten Morse-Kegels. Der Einsatz 20 ist in die konische Bohrung 26 der Ueberwurfmutter 30 eingesetzt, wobei der Kragen 18 auf einer Auflagefläche 22 der Ueberwurfmutter 30 aufliegt.

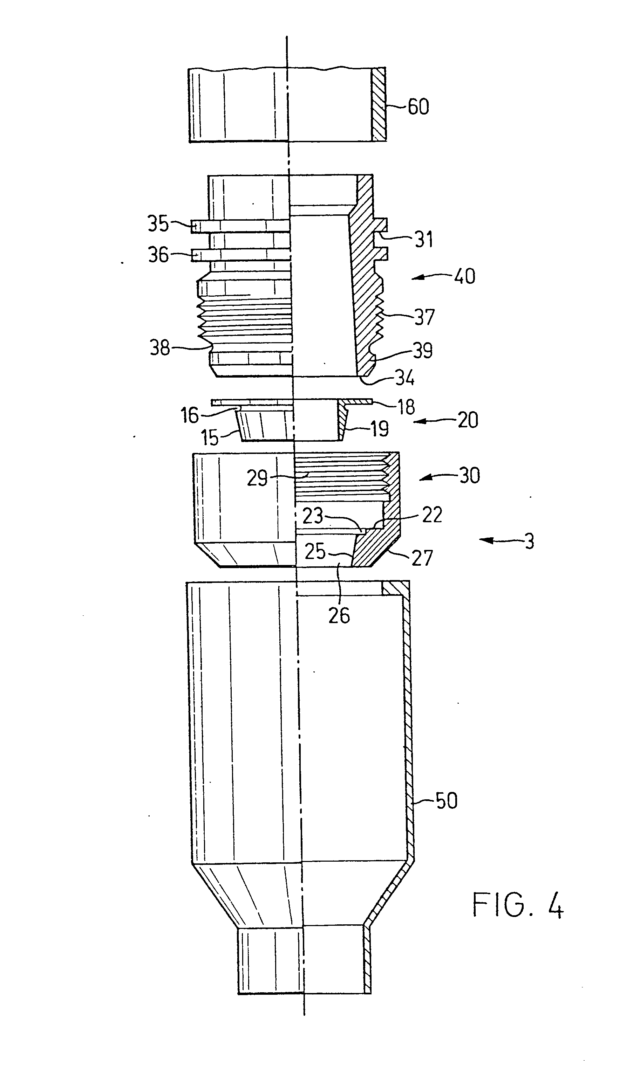

Die Ueberwurfmutter 30 weist eine nicht durchgehende zylindrische Bohrung 21 (Fig. 4) mit einem Innengewinde 29 und einem durch eine Ausnehmung 28 von dem Innengewinde 29 abgesetzten konischen Flansch 27 auf, der radial nach innen gerichtet ist und eine konische Bohrung 26 aufweist. Die Bohrung 26 ist durch eine sich axial nach aussen verjüngende konische Auflagefläche 25 begrenzt. Die senkrecht zur Drehachse I stehende Auflagefläche 22 ist durch eine Ausnehmung 23 von der konischen Auflagefläche 25 abgesetzt.

Zwischen der Auflagefläche 15 und der Auflagefläche 25 ist das aufgeweitete Abschirmgeflecht 9 geklemmt, wobei das Ende des Abschirmgeflechts 9 am Kragen 18 des Einsatzes 20 anstösst. Die Ausnehmung 16 des Einsatzes 20 und die Ausnehmung 23 der Ueberwurfmutter 30 umschliessen einen torusförmigen Kanal 12, der Teile des Abschirmgeflechts 9 aufnehmen kann. Bei eingepresstem Einsatz 20 ist das Abschirmgeflecht 9 auch ohne zusätzliche Sicherung an die Anschlussvorrichtung 3 fixiert.

Das Steckerendgehäuse 40 ist im wesentlichen zylindrisch geformt und besteht aus dem ringförmigen Auflageelement 39, dem durch eine Rundnut 38 davon abgesetzten Aussengewinde 37, und den beiden angeformten Ringen 36 und 35, die durch eine Nut 31 voneinander getrennt sind.

Die Figur 4 zeigt im Halbschnitt die zur besseren Sichtbarkeit distanziert dargestellten Teile der Anschlussvorrichtung 3 sowie schematisch das Warmschrumpfformteil 50 und das Stecker-Kontaktteil 60.

Bei der Montage wird das aufgeweitete Abschirmgeflecht 9 bis zum Anschlag an den Kragen 18 über den Einsatzkonus 19 gestossen. Der Einsatz 20 wird anschliessend in die konische Bohrung 26 der Ueberwurfmutter 30 gepresst, bis der Kragen 18 auf der Auflagefläche 22 aufliegt. Ueber die Auflagefläche 25 hinausragende Teile des Abschirmgeflechts 9 sammeln sich im Kanal 12. Das Steckerendgehäuse 40 wird in die Ueberwurfmutter 30 eingeschraubt, bis das Auflageelement 39 mit der Frontfläche 34 auf dem Kragen 18 aufliegt und dadurch eine zusätzliche Sicherung des Anschlusses 3 gewährleistet.

Abschliessend wird das Warmschrumpfformteil 50 in bekannter Weise über die Anschlussvorrichtung 3 montiert,
womit ein Schutz vor Feuchtigkeit, Staub und mechanischen Einwirkungen erreicht wird.

Patentansprüche:

1. Strahlungsdichte Anschlussvorrichtung für ein Kabel mit einem durch Klemmung fixierten Abschirmgeflecht, wobei ein Einsatz ausgestattet mit einem Einsatzkonus und einem angeformten Kragen in eine konische Bohrung einer Ueberwurfmutter achsparallel eingesetzt ist, dadurch gekennzeichnet, dass am Einsatzkonus (19) eine konische Auflagefläche (15) vorgesehen ist, die der Auflagefläche (25) der konischen Bohrung (26) der Ueberwurfmutter (30) entspricht, und dass das geflochtene Abschirmgeflecht (9) ausschliesslich durch Klemmung zwischen den beiden Auflageflächen (15,25) festgelegt ist.

2. Anschlussvorrichtung nach Anspruch 1, dadurch gekennzeichnet, dass die Auflagefläche (15) des Einsatzkonus (20) und die Auflagefläche (25) der Ueberwurfmutter (30) an sich bekannnte Morse-Kegel sind.

3. Anschlussvorrichtung nach Anspruch 1 und 2, dadurch gekennzeichnet, dass ein Kragen (18) des Einsatzkonus (20) durch eine ringförmige Ausnehmung (16) von der konischen Auflagefläche (15) abgesetzt ist.

4. Anschlussvorrichtung nach Anspruch 1 und 2, dadurch gekennzeichnet, dass im montierten Zustand eine Aus- nehmung (23) der Ueberwurfmutter (30) und die Ausnehmung (16) des Einsatzes (20) einen torusförmigen Kanal (12) zur Aufnahme eines Teils des Abschirmgeflechts (9) vorgesehen ist.

5. Anschlussvorrichtung nach Anspruch 1, dadurch gekennzeichnet, dass der Einsatz (20) durch ein in die Ueberwurfmutter (30) eingeschraubtes Steckerendgehäuse (40) zusätzlich fixiert ist.

FIG. 1

FIG. 2

FIG. 3

0034792

FIG. 4

0034792

Nummer der Anmeldung

**EP 81 10 1122**

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 2 805 399 (LEEPER)<br><br>* Spalte 2, Zeilen 71,72; Spalte 3; Spalte 4, Zeilen 1-4 *<br>--- | 1,5 |
| | US - A - 3 769 444 (AERONICS)<br><br>* Spalte 2, Zeilen 11-68; Spalte 3, Zeilen 1-62 *<br>--- | 1,3-5 |
| | DE - C - 836 370 (SIEMENS)<br><br>* Seite 2, Zeilen 1-63 *<br>--- | 1,5 |
| | FR - A - 1 439 160 (PERENA)<br><br>* Seite 1, rechte Spalte, Absätze 5-7; Seite 2, linke Spalte, Absätze 1 und 2 *<br>--- | 1,5 |
| | FR - A - 1 162 928 (VUILLEMOT)<br><br>* Seite 2, linke Spalte, Absätze 2-8; rechte Spalte; Seite 3, linke Spalte; rechte Spalte, Absätze 1-6 *<br>--- | 1,5 |
| | FR - A - 2 140 193 (SPINNER)<br><br>* Seite 2, Zeilen 37-40; Seiten 3-6 *<br>--- | 1,5 |
| | DE - B - 1 075 699 (SIHN)<br><br>* Spalte 1, Zeilen 42-54; Spalte 2; Spalte 3, Zeilen 1-9 *<br>--- | 1,4,5 |

./..

**KLASSIFIKATION DER ANMELDUNG (Int Cl )**

H 01 R 17/12

**RECHERCHIERTE SACHGEBIETE (Int. Cl )**

H 01 R 17/12
. 9/05
H 02 G 15/08
15/02

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prufer |
|---|---|---|
| Den Haag | 25.05.1981 | LOMMEL |

EPA form 1503.1   06.78

Europäisches
Patentamt  **EUROPÄISCHER TEILRECHERCHENBERICHT**

| Kategorie | Kennzeichnung des Dokuments mit Angabe, soweit erforderlich, der maßgeblichen Teile | betrifft Anspruch |
|---|---|---|
| | FR - A - 1 284 648 (GEOFFROY-DELORE) | 1,4,5 |
| | * Seite 2, linke Spalte, Absätze 3-9; rechte Spalte; Seite 3, linke Spalte, rechte Spalte; Absätze 1-5 * | |
| | --- | |
| | US - A - 3 609 651 (BUNKER-RAMO) | 1,5 |
| | * Spalte 1, Zeilen 63-75; Spalte 2 * | |
| | --- | |
| | DE - A - 1 540 280 (PLESSEY) | 1,5 |
| | * Seite 7, Absatz 3; Seiten 8-16 * | |
| | --- | |
| | US - A - 2 673 233 (SPERRY) | 1,5 |
| | * Spalten 3-6; Spalte 7, Zeilen 1-24; Spalte 8, Zeilen 36-75; Spalten 9,10; Spalte 11, Zeilen 1-16 * | |

**EINSCHLÄGIGE DOKUMENTE**

KLASSIFIKATION DER ANMELDUNG (Int. Cl.³)

RECHERCHIERTE SACHGEBIETE (Int. Cl.³)

EPA Form 1505.3  06.78